# EUROPÄISCHE PATENTSCHRIFT

(11) **EP 0 566 935 B1**
(45) Veröffentlichungstag und Bekanntmachung des Hinweises auf die Patenterteilung: **17.11.1999**
(21) Anmeldenummer: 93105789.7
(22) Anmeldetag: 07.04.1993
(51) Int. Cl.: H04L 12/40, H04L 12/46

(54) **Schnittstellenbaustein zum Verbinden zweier Bussegmente**
Interface module for connecting two bus segments
Module d'interface pour connecter deux segments de bus

(30) Priorität: 24.04.1992 DE 4213569; 24.07.1992 DE 4224520
(43) Veröffentlichungstag der Anmeldung: 27.10.1993
(73) Patentinhaber: SIEMENS AKTIENGESELLSCHAFT, 80333 München (DE)
(72) Erfinder: Flach, Werner, Dipl.-Ing., W-8450 Amberg (DE); Brendle, Gilles, F-68110 Illzach (FR)

(56) Entgegenhaltungen:
- EP-A- 0 416 291
- EP-A- 0 419 712
- GB-A- 2 185 666
- US-A- 4 099 024

## Beschreibung

Die vorliegende Erfindung betrifft einen Schnittstellenbaustein zum Verbinden zweier Bussegmente,
- mit mindestens zwei Bustreibern, die jeweils zumindest
   -- einen Sender mit einem internen Empfangseingang und einem externen Sendeausgang,
   -- einen Empfänger mit einem externen Empfangseingang und einem internen Sendeausgang und
   -- mindestens einen Steuereingang zum Schalten des Bustreibers auf externes Senden bzw. Empfangen aufweisen,
- wobei der Schnittstellenbaustein zwei voneinander getrennte Ansteuerschaltungen aufweist,
- wobei die internen Sendeausgänge der Empfänger der Bustreiber über je eine der Ansteuerschaltungen mit dem Steuereingang des jeweils anderen Bustreibers verbunden sind.

Ein derartiger Schnittstellenbaustein ist z.B. aus der GB 2 185 666 A bekannt.

Die Aufgabe der vorliegenden Erfindung besteht darin, eine möglichst einfache und billige Elektronik für den Schnittstellenbaustein zur Verfügung zu stellen.

Die Aufgabe wird dadurch gelöst, daß die Ansteuerschaltungen Busauswertungsschaltungen aufweisen, welche jeweils
- einen Leitungswiderstand aufweisen, der zwischen dem internen Sendeausgang des einen Bustreibers und dem Steuereingang des anderen Bustreibers angeordnet ist,
- einen Kondensator aufweisen, der den Leitungswiderstand steuereingangsseitig mit dem Sendepotential des Sendeausgangs, z.B. Masse, verbindet, und
- eine Diode aufweisen, die parallel zum Leitungswiderstand angeordnet und bezüglich Ruhe- und Sendepotential in Sperrichtung geschaltet ist,
- so daß das Ausgangssignal der Busauswertungsschaltung steuereingangsseitig am Leitungswiderstand abgreifbar ist.

Die Elektronik wird noch einfacher, wenn der Schnittstellenbaustein zwei Verzögerungsschaltungen aufweist, wobei die internen Sendeausgänge über je eine der Verzögerungsschaltungen mit dem internen Empfangseingang des Senders des jeweils anderen Bustreibers verbunden sind.

Wenn die Zeitkonstante des von Leitungswiderstand und Kondensator gebildeten RC-Gliedes derart bemessen ist, daß ein Übergang vom Sende- auf das Ruhepotential des einen Bustreibers erst nach dem aktiven Senden des Übergangs durch den anderen Bustreiber den anderen Bustreiber vom Senden auf Empfangen umschaltet, ist gewährleistet, daß der Bus nach einer Nachrichtenübertragung schnell wieder betriebsbereit wird.

Vorteilhafterweise ist der Schnittstellenbaustein derart ausgestaltet,
- daß er einen Zusatztreiber aufweist, dessen interner Sendeausgang mit dem internen Sendeausgang eines der Bustreiber und/oder dessen interner Empfangseingang mit dem internen Empfangseingang des einen Bustreibers verbunden ist,
- daß das Logikgatter der Ansteuerschaltung, die mit dem Steuereingang dieses Bustreibers verbunden ist, mindestens zwei Eingänge aufweist, wobei ein Eingang mit der zugehörigen Busauswertungsschaltung verbunden ist,
- daß der zweite Eingang des Logikgatters über einen Schalter mit mindestens zwei Schaltstellungen wahlweise mit dem Ruhe- und dem Sendepotential verbindbar ist,
- daß ein Aktivierungssteuereingang des Zusatztreibers über ein Logikgatter und denselben Schalter ebenfalls wahlweise mit dem Ruhe- und dem Sendepotential verbindbar ist,
- daß in der einen Schaltstellung das Ausgangssignal des Logikgatters vom Ausgangssignal der zugehörigen Busauswertungsschaltung abhängt, so daß der Bustreiber, dessen Steuereingang mit dem Ausgangssignal des Logikgatters beaufschlagt ist, in Abhängigkeit vom Ausgangssignal der Busauswertungsschaltung als Sender bzw. als Empfänger betreibbar ist, und der Zusatztreiber deaktiviert ist und
- daß in der anderen Schaltstellung das Ausgangssignal des Logikgatters durch die Schaltstellung festgelegt ist, so daß der Bustreiber, dessen Steuereingang mit dem Ausgangssignal des Logikgatters beaufschlagt ist, nur als Sender bzw. nur als Empfänger betreibbar ist, und der Zusatztreiber in der zur Betriebsart des Bustreibers komplementären Betriebsart betreibbar ist.

Dann ist nämlich in besonders einfacher Weise ein Wechsel von bidirektionalem Betrieb einer Zweidraht-Busleitung zu unidirektionalen Betrieb zweier Zweidraht-Busleitungen, also ein unidirektionaler Vierdraht-Betrieb, möglich. Im unidirektionalen Betrieb sind erheblich größere Entfernungen als im bidirektionalen Betrieb übertragbar, typisch 5 mal so große Entfernungen.

Die Umschaltung des einen Bustreibers ist besonders einfach, wenn der zweite Eingang des Logikgatters über einen Pullwiderstand mit dem Ruhe- bzw. dem Sendepotential verbunden ist. Ebenso ist die Aktivierung des Zusatztreibers besonders einfach, wenn der Aktivierungssteuereingang des Zusatztreibers über einen Pullwiderstand mit dem Ruhe- bzw. dem Sendepotential verbunden ist.

Wenn der Schnittstellenbaustein einen Koppeltreiber zum Einspeisen und Empfangen von Bussignalen aufweist, dessen interner Sendeausgang eingangsseitig mit den Verzögerungsschaltungen verbunden ist, dessen interner Empfangseingang mit den internen Sendeausgängen der Bustreiber verbunden ist, z. B. über ein Logikgatter, und dessen Steuereingang mit einer Sendeanforderungsleitung verbunden ist, so kann an den Schnittstellenbaustein ein Busteilnehmer angeschlossen werden.

Der Schnittstellenbaustein ist in einem Ringbussystem mit impliziter Redundanz verwendbar, wenn
- der Schnittstellenbaustein ein Senderichtungsflipflop mit einem Umschalteingang aufweist, der mit der Sendeanforderungsleitung verbunden ist,
- der Schnittstellenbaustein eine Senderichtungsauswertungsschaltung aufweist, die eingangsseitig mit der Sendeanforderungsleitung und dem Senderichtungsflipflop verbunden ist und die zwei Senderichtungssignale liefert, und
- zwischen den internen Sendeausgängen der Bustreiber einerseits und den Verzögerungsschaltungen und den Ansteuerschaltungen andererseits Sperrgatter angeordnet sind, denen je eines der Senderichtungssignale der Senderichtungsauswertungsschaltung zugeführt ist.

Bei höheren Baudraten treten Übertragungsprobleme auf, da es nicht nur zu Amplitudenverzerrungen, sondern auch zu Phasenverzerrungen kommt. Ursache dieser Phasenverzerrung, die bei höheren Baudraten nicht mehr vernachlässigbar sind, sind z. B. die Einflüsse von Kabel und Verstärkerbausteinen. Wenn der Schnittstellenbaustein einen Logikbaustein und einen Taktgeber mit einem Taktausgang aufweist, wobei der Logikbaustein eingangsseitig mit dem Taktausgang des Taktgebers und den internen Sendeausgängen der Empfänger und ausgangsseitig mit den internen Empfangseingängen der Sender verbunden ist, werden die empfangenen Signale jedoch nicht nur bezüglich ihrer Amplituden, sondern auch bezüglich ihrer Phasenbeziehungen aufgefrischt und so die Übertragungsprobleme beseitigt.

Es wird nämlich erreicht, daß der Logikbaustein bei bekannter Baudrate die empfangenen Signale identifiziert und sofort richtig wieder ausgibt.

Vorzugsweise ist der Logikbaustein ein programmierbares Logikfeld, z.B. ein GAL. Die Programmierung von Logikfeldern ist nämlich relativ einfach und für Fachleute leicht möglich.

Wenn der Logikbaustein einen Reseteingang aufweist und der Reseteingang über ein RC-Glied an die Versorgungsspannung angeschlossen ist, ist gewährleistet, daß bei einem Anlauf des Schnittstellenbausteins der Logikbaustein erst nach dem Anliegen der Versorgungsspannung seinen Betrieb aufnimmt.

Wenn zwischen dem Logikbaustein und den internen Empfangseingängen eine Verzögerungsschaltung angeordnet ist, ist gewährleistet, daß der Bustreiber, der das empfangene Signal wieder aussenden soll, mit Sicherheit bereits auf Senden geschaltet ist, wenn das neu auszusendende Signal an diesem Bustreiber ansteht.

Wenn der Schnittstellenbaustein derart ausgebildet ist,
- daß er eine Auswerteschaltung aufweist, die eingangsseitig mit den internen Sendeausgängen und ausgangsseitig mit der Verzögerungsschaltung verbunden ist,
- daß die Auswerteschaltung über einen Schalter mit mindestens zwei Schaltstellungen wahlweise mit dem Ruhe- und dem Sendepotential verbindbar ist,
- daß der Logikbaustein über denselben Schalter ebenfalls wahlweise mit dem Ruhe- und dem Sendepotential verbindbar ist,
- daß in der einen Schaltstellung das Ausgangssignal des Logikbausteins von den Ausgangssignalen der internen Sendeausgänge abhängt und die Auswerteschaltung ein unveränderliches Ausgangssignal liefert, wobei das Ausgangssignal der Auswerteschaltung derart festgelegt ist, daß das Ausgangssignal der Verzögerungsschaltung vom Ausgangssignal des Logikbausteins abhängt, und
- daß in der anderen Schaltstellung das Ausgangssignal der Auswerteschaltung von den Ausgangssignalen der internen Sendeausgänge abhängt und der Logikbaustein ein unveränderliches Ausgangssignal liefert, wobei das Ausgangssignal des Logikbausteins derart festgelegt ist, daß das Ausgangssignal der Verzögerungsschaltung vom Ausgangssignal der Auswerteschaltung abhängt,
ist es möglich, den Schnittstellenbaustein zwischen selbststeuerndem baudratenunabhängigem Betrieb (über die Auswerteschaltung) und selbststeuerndem Betrieb mit fest vorgegebener Baudrate (über den Logikbaustein) umzuschalten.

Weitere Vorteile und Einzelheiten ergeben sich aus der nachfolgenden Beschreibung eines Ausführungsbeispiels, anhand der Zeichnungen und in Verbindung mit den weiteren Unteransprüchen. Dabei zeigen:
- FIG 1 - 3: jeweils eine mögliche Verwendung des Schnittstellenbausteins,
- FIG 4 - 6: jeweils eine interne Verschaltung des Schnittstellenbausteins,
- FIG 7: einen Schnittstellenbaustein,
- FIG 8: die Auswerteeinheit und
- FIG 9: das Prinzip der Signalerkennung.
Schnittstellenbausteine zum Verbinden zweier Bussegmente, oft auch als Repeater bezeichnet, werden im Regelfall für drei verschiedene Aufgaben verwendet. Diese Aufgaben sind schematisch in den Figuren 1 bis 3 dargestellt.

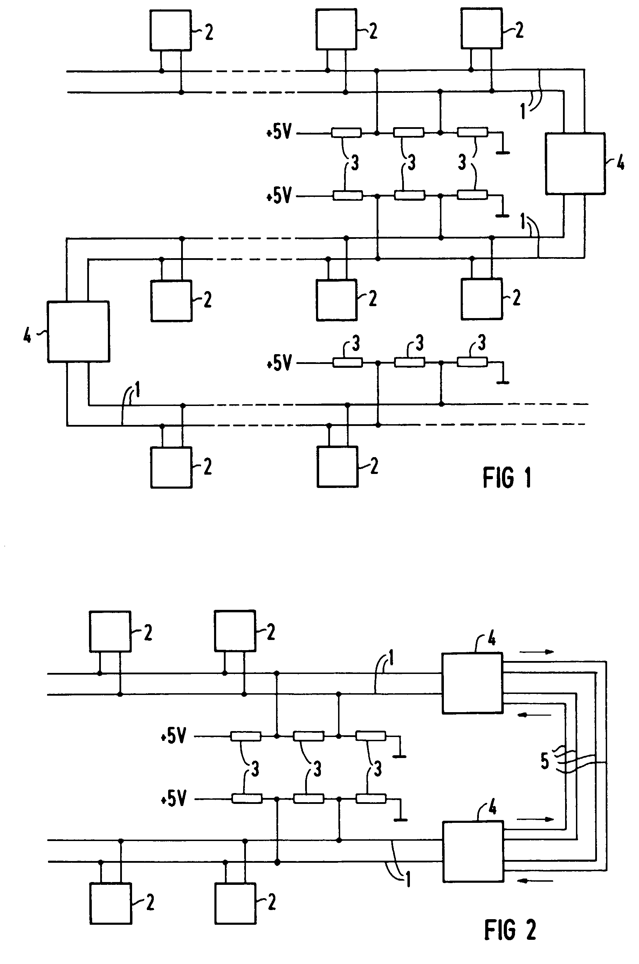

Gemäß FIG 1 sind an die Bussegmente 1 eines Zweidraht-Linienbusses Busteilnehmer 2 angeschlossen. Der Linienbus wird dabei mittels der Widerstände 3 im Ruhezustand auf seinem logischen Eins-Pegel gehalten. Da die Busteilnehmer 2 nur einen begrenzten Fan-Out von ca. 30 besitzen, können pro Bussegment 1 nur maximal 30 Busteilnehmer 2 angeschlossen werden. Zwischen den einzelnen Bussegmenten 1 muß dann stets eine Signalauffrischung erfolgen. Diese Aufgabe wird von den Schnittstellenbausteinen 4 wahrgenommen. Auch die obenerwähnten Widerstände 3 sind üblicherweise in die Schnittstellenbausteine 4 mit integriert.

Die Busteilnehmer 2 können über ihre Bustreiber auch nicht beliebige lange Leitungslängen überbrücken. Auch hierfür werden die Schnittstellenbausteine 4 verwendet. Die Bussegmente 1 werden im bidirektionalen Datenverkehr betrieben. Wenn große Entfernungen zu überbrücken sind, ist ein unidirektionaler Datenverkehr jedoch vorteilhafter. Bei unidirektionalem Betrieb, typisch z.B. 3 km statt 500 m im bidirektionalen Betrieb. Gemäß FIG 2 können die Schnittstellenbausteine 4 daher auch die Signale vom Zweidraht-Linienbussegment 1 auf das Vierdraht-Linienbussegment 5 umsetzen und umgekehrt. Das Vierdraht-Linienbussegment 5 weist zwei Zweidraht-Linienbusse auf, die jeweils unidirektional betrieben werden. Auch diese Umsetzung von Zweidraht auf Vierdraht und umgekehrt erfolgt in den Schnittstellenbausteinen 4.

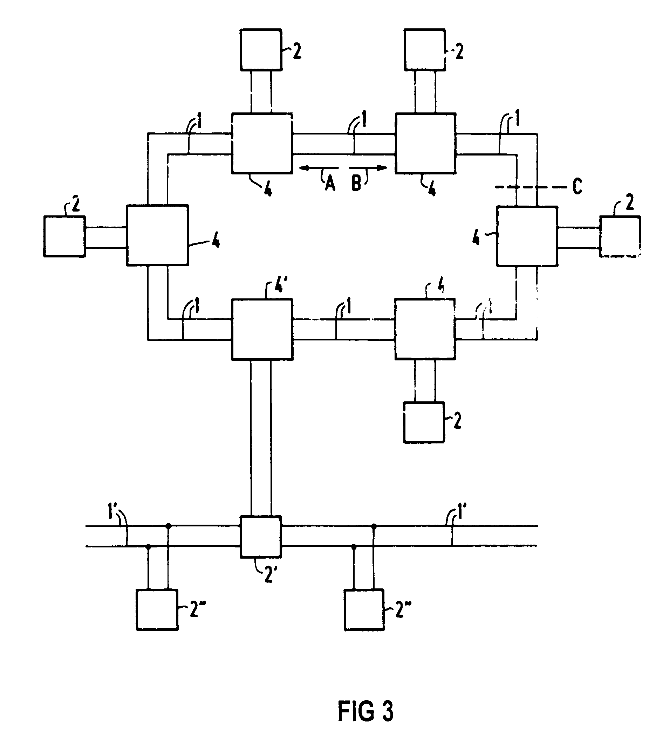

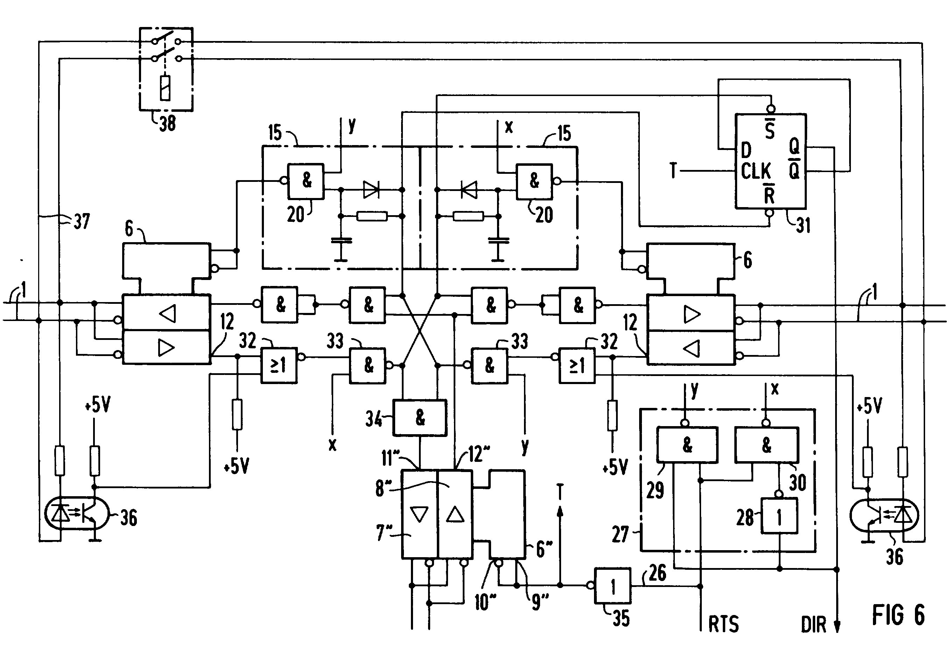

FIG 3 zeigt eine weitere Verwendungsmöglichkeit für Schnittstellenbausteine 4, 4'. Hier weist jeder Busteilnehmer 2, 2' einen eigenen Schnittstellenbaustein 4, 4' auf. Die Schnittstellenbausteine 4, 4' sind mittels der Bussegmente 1 zu einem Ring zusammengeschlossen. Das Ringbussystem gemäß FIG 3 wird dabei erst durch die Schnittstellenbausteine gemäß FIG 6 ermöglicht.

Ebenfalls dargestellt in FIG 3 ist der Spezialfall, daß ein bzw. mehrere der Busteilnehmer des Rings selbst Schnittstellenbausteine sind. Im vorliegenden Fall ist der Schnittstellenbaustein 2' als Busteilnehmer des Ringbussystems über den Schnittstellenbaustein 4' an den Ring angeschlossen. Vom Schnittstellenbaustein 2' verzweigen dann wieder andere Bussegmente 1', an die weitere Busteilnehmer 2" angeschlossen sind.

Bei einem Ringbussystem gemäß FIG 3 kann der Datentransfer üblicherweise nur in einer Richtung erfolgen, also z.B. nur in Richtung A oder nur in Richtung B. Wenn nun der Bus an einer Stelle, z.B. der Stelle C, unterbrochen ist, kann kein Datentransfer mehr erfolgen. Mit den Schnittstellenbausteinen 4, 4' der vorliegenden Erfindung ist jedoch auch ein Betrieb abwechselnd in Richtung A und Richtung B möglich. Wenn der Ringbus an einer Stelle C unterbrochen ist, kann daher ein Notbetrieb des Ringbusses immer noch in Form eines Linienbusses aufrecht erhalten werden.

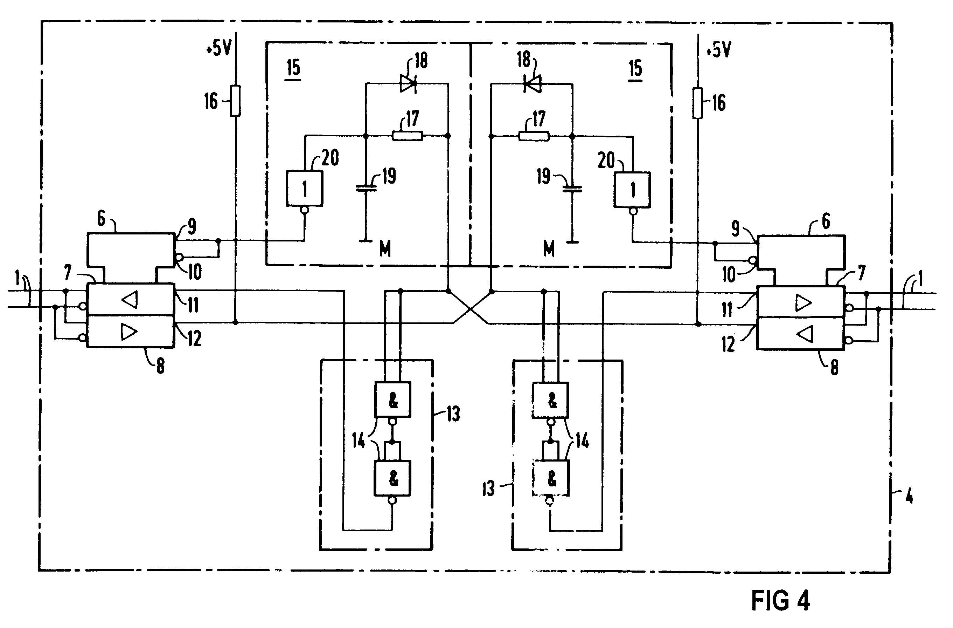

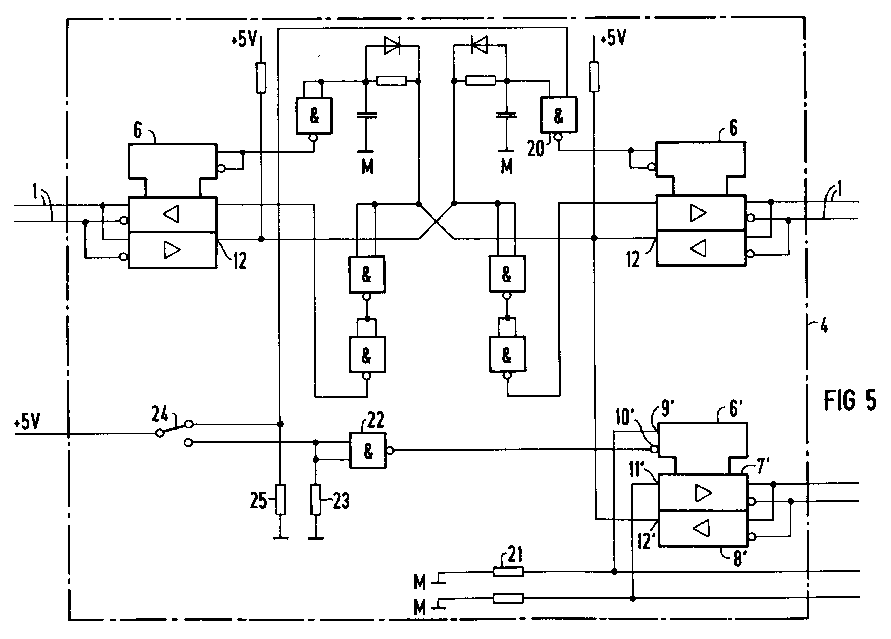

In den nachfolgenden Figuren 4 bis 6 wird nunmehr das Prinzipschaltbild des Schnittstellenbausteins 4 näher erläutert. Dabei zeigt FIG 4 die Minimalkonfiguration des Schnittstellenbausteins 4. In dieser Konfiguration ist der Schnittstellenbaustein 4 nur als einfacher Repeater von einem Zweidraht-Linienbus auf einen Zweidraht-Linienbus einsetzbar. Im Regelfall wird daher einer der in FIG 5 bzw. FIG 6 dargestellten Schnittstellenbausteine 4 bzw. eine Kombination der in FIG 5 und FIG 6 dargestellten Schnittsteilenbausteine verwendet. Anhand der in FIG 4 dargestellten Minimalkonfiguration läßt sich aber das Funktionsprinzip des Schnittstellenbausteins 4 am einfachsten erläutern.

Gemäß FIG 4 weist der Schnittstellenbaustein 4 zwei Bustreiber 6 auf. Jeder der Bustreiber 6 weist einen Sender 7 und einen Empfänger 8 sowie zwei Steuereingänge 9, 10 auf. Die Bustreiber 6 sind typisch Differenzempfänger, z.B. RS 485-Transceiver vom Typ SN 65176 B oder SN 75176 B von Texas Instruments zum Aufbau einer RS 485-Schnittstelle.

Die Sender 7 der Bustreiber 6 weisen je einen internen Empfangseingang 11 auf. Die Empfänger 8 weisen je einen internen Sendeausgang 12 auf. Extern sind Sender 7 und Empfänger 8 derart gestaltet, daß der Sender 7 zwei externe Sendeausgänge und der Empfänger 8 zwei externe Empfangseingänge aufweist. Diese Anschlüsse sind zusammengefaßt und bilden die zwei Anschlüsse zum Zweidraht-Linienbus 1.

Die internen Sendeausgänge 12 sind über je eine Verzögerungsschaltung 13 an die internen Empfangseingänge 11 des jeweils anderen Bustreibers 6 angeschlossen. Die Verzögerungsschaltungen 13 weisen je zwei NAND-Gatter 14 auf.

Die internen Sendeausgänge 12 der Bustreiber 6 sind weiterhin über die Ansteuerschaltungen 15, denen auch die Pullwiderstände 16 zuzurechnen sind, an die Steuereingänge 9, 10 der jeweils anderen Bustreiber angeschlossen. Die Ansteuerschaltungen 15 weisen außer den Pullwiderständen 16 noch die Leitungswiderstände 17, die Dioden 18 und die Kondensatoren 19 auf. Dieser Schaltungsgruppierung, im folgenden als Busauswertungsschaltung bezeichnet, ist jeweils noch ein als Inverter ausgebildetes Logikgatter 20 nachgeschaltet. Über die Pullwiderstände 16 sind die internen Sendeausgänge 12 mit dem Ruhepotential der Bustreiber 6, hier + 5 Volt, verbunden. Ebenso sind die Eingänge der Logikgatter 20 über die Kondensatoren 19 mit dem Sendepotential der Bustreiber 6, hier Masse M, verbunden.

Durch das Busprotokoll ist gewährleistet, daß am Ende einer Nachrichtenübertragung der sendende Busteilnehmer 2 ein "High"-Signal auf dem Linienbus 1 legt. Wenn danach keine Nachrichten mehr über den Zweidraht-Linienbus 1 übertragen werden, halten die bei FIG 1 beschriebenen Widerstände 3 das "High"-Signal auf dem Linienbus 1. Dadurch ergibt sich für den Schnittstellenbaustein 4 folgende Situation:

Wenn ein "Low"-Signal vom linken Bustreiber 6 zum rechten Bustreiber 6 übertragen werden soll, so wird dies dadurch detektiert, daß der linke Linienbus 1 ein "Low"-Signal liefert. Dadurch wird der interne Sendeausgang 12 des Empfängers 8 des linken Bustreibers 6 von seinem Ruhepotential (+ 5 Volt) auf sein Sendepotential (M) gelegt. Über den Leitungswiderstand 17 und die Diode 18 der rechten Busauswertungsschaltung wird der Eingang des Logikgatters 20 daher schlagartige auf "Low" gelegt. Der Ausgang des Logikgatters 20 geht daher nach der Schaltzeit des Logikgatters 20 auf "High". Dadurch wird der Empfänger des rechten Bustreibers 6 gesperrt, der interne Sendeausgang 12 dieses Bustreibers also hochohmig. Ferner wird der Sender 7 auf Senden geschaltet. Der rechte Bustreiber 6 wird also die ankommenden Signale weitergeben.

Die Signale, die am internen Empfangseingang 11 des rechten Bustreibers 6 ankommen, kommen jedoch erst mit einer Verzögerung von zwei Schaltzeiten dort an. Diese Verzögerung um zwei Schaltzeiten durch die NAND-Gatter 14 ist nötig, damit trotz der Verzögerung durch das Logikgatter 20 die Ansteuerung des rechten Bustreibers 6 rechtzeitig erfolgt.

Nach dieser ersten Ansteuerung des rechten Bustreibers 6 auf "Senden" bleibt der rechte Bustreiber 6 solange als Sender wirksam, bis das "Low"-Signal zu Ende übertragen ist. Dies wird dadurch gewährleistet, daß der Leitungswiderstand 17 und der Kondensator 19 ein RC-Glied bilden.

Durch entsprechende Bemessung von Leitungswiderstand 17 und Kondensator 19 kann erreicht werden, daß das Logikgatter 20 sein Ausgangssignal nach dem Empfang eines "High"-Signals erst dann ändert, wenn dieser Signalwechsel vom rechten Bustreiber 6 aktiv mit übertragen wurde. Erst danach wird der rechte Bustreiber 6 wieder auf "Empfangen" geschaltet.

Durch das Busprotokoll ist gewährleistet, daß das letzte übertragene Bit einer Nachricht ein "High"-Signal führt. Dadurch wird gewährleistet, daß alle Linienbussegmente 1 aktiv wieder auf "High" gelegt werden, so daß der Bus betriebsbereit bleibt.

Weiterhin sind die internen Sendeausgänge 12 über die Pullwiderstände 16 auf das Potential + 5 Volt gelegt. Dadurch wird erreicht, daß - bei einer Datenübertragung von links nach rechts - der linke Bustreiber 6 auf Empfang geschalten bleibt, obwohl der interne Sendeausgang 12 des rechten Bustreibers 6 hochohmig ist.

Wie bereits erwähnt liegen an den Eingängen der Logikgatter 20 + 5 Volt an, ihr Ausgangssignal ist daher gleich dem Massepotential M. Dadurch befinden sich beide Bustreiber 6 in folgendem Zustand: Die Sender 7 können eingangsseitig nicht empfangen und sind ausgangsseitig auf hochohmig geschaltet. Die Empfänger 8 sind auf Empfang geschaltet. Der Schnittstellenbaustein 4 ist also zum Empfang des nächsten übertragenen "Low"-Bits bereit.

Der in FIG 4 beschriebene Schnittstellenbaustein ist baudratenunabhängig. Er kann empfangene Signale zwar bezüglich ihrer Amplitude wieder auffrischen, kann aber bei der Übertragung entstandene Phasenverzerrungen der Signale aufgrund seiner Baudratenunabhängigkeit nicht wieder ausgleichen. Bei entsprechender Ausgestaltung der Elektronikschaltung zwischen den internen Sendeausgängen 12 des einen Bustreibers 6 und den internen Empfangseingängen 11 des jeweils anderen Bustreibers 6 können aber auch derartige Signalverzerrungen ausgeglichen werden, wenn die Baudrate, mit der Nachrichten auf dem Bus übertragen werden, bekannt ist.

FIG 5 zeigt nun die Prinzipschaltung von FIG 4 in einem Repeater, der von Zweidraht-Betrieb auf Vierdrant-Betrieb umschaltbar ist. Der Einfachheit halber werden nachstehend nur die Unterschiede zu FIG 4 erlautert.

Wie aus FIG 5 ersichtlich ist, weist der Schnittstellenbaustein 4 einen Zusatztreiber 6' auf. Der interne Sendeausgang 12' dieses Zusatztreibers 6' ist mit dem internen Sendeausgang 12 des rechten Bustreibers 6 verbunden. Der Steuereingang 9', mittels dessen der Sender 7' auf Senden geschaltet werden kann, ist über den Pullwiderstand 21 mit Masse M verbunden. Dadurch ist der Sender 7' auf hochohmig geschalten. Der Steuereingang 10', mittels dessen der Empfänger 8' gesteuert wird, ist mit dem NAND-Gatter 22 verbunden. Das NAND-Gatter 22 ist über den Pullwiderstand 23 an Masse M und über den Schalter 24 an + 5 Volt angeschlossen. Gleiches gilt für das als NAND-Gatter ausgebildete Logikgatter 20, dessen Ausgangssignal den rechten Bustreiber 6 steuert. Dieses Logikgatter 20 ist ebenfalls über den Schalter 24 mit + 5 Volt und über den Pullwiderstand 25 mit Masse M verbunden.

Wenn der Schalter 24 einen Eingang des Logikgatters 20 mit + 5 Volt verbindet, wie in FIG 5 dargestellt, ist gleichzeitig die Verbindung von + 5 Volt zum Eingang des NAND-Gatters 22 unterbrochen. Dadurch ergibt sich folgende Situation:

Ein Eingang des Logikgatters 20 ist mit logisch 1 verbunden. Dadurch ergibt sich das Ausgangssignal des Logikgatters 20 in Abhängigkeit des Ausgangssignals der vorgeschalteten Busauswertungsschaltung. Der rechte Bustreiber 6 kann also zwischen Senden und Empfangen hin- und hergeschalten werden. Der an den rechten Bustreiber 6 angeschlossene Linienbus 1 wird also als bidirektionaler Zweidrahtbus betrieben.

Am Eingang des NAND-Gatters 22 steht eine logische Null an, das NAND-Gatter 22 liefert also eine logische 1. Dadurch ist außer dem Sender 7' auch der Empfänger 8' des Zusatztreibers 6' auf hochohmig geschaltet. Der Zusatztreiber 6' kann also weder als Sender noch als Empfänger wirken. Er ist deaktiviert.

Wenn der Schalter 24 dagegen in der anderen Schaltstellung ist, ist das Ausgangssignal des Logikgatters 20 stets 1, da an einem Eingang des Logikgatters 20 über den Pullwiderstand 25 ein Massesignal anliegt. Der rechte Bustreiber 6 ist daher permanent als Sender wirksam.

Umgekehrt liefert das NAND-Gatter 22 nunmehr als Ausgangssignal eine logische Null. Dadurch wird der Zusatztreiber 6' in den Zustand "Empfangen" geschalten. Der Zusatztreiber 6' ist also permanent als Empfänger wirksam.

Mittels der einfachen Schaltung von FIG 5 kann daher in äußerst einfacher und kostengünstiger Weise von Zweidraht-Betrieb auf Vierdraht-Betrieb und umgekehrt gewechselt werden. Falls zur Überbrückung extrem langer Strecken auch eine Übertragung von Vierdraht auf Vierdraht gewünscht werden sollte, kann selbstverständlich auch der linke Bustreiber 6 mit einem weiteren Zusatztreiber und einer entsprechenden Beschaltung versehen werden.

FIG 6 zeigt nun einen Schnittstellenbaustein 4 für die Verwendung in einem Ringbussystem gemäß FIG 3. Auch in FIG 6 werden der Einfachheit halber nur die Unterschiede zu FIG 4 erläutert.

Wie obenstehepd erwähnt, wird der Schnittstellenbaustein 4 gemäß FIG 6 in einem Ringbussystem verwendet. An jedem Schnittstellenbaustein 4 des Ringbussystems ist dabei ein Busteilnehmer angeschlossen, der der Übersichtlichkeit halber in FIG 6 nicht dargestellt ist. Der Schnittstellenbaustein 4 verfügt daher über einen Koppeltreiber 6", mittels dessen der Busteilnehmer Daten in den Bus 1 einspeisen kann und über den Bus 1 übertragene Daten empfangen kann. Der Koppeltreiber 6" wird dabei über das Sendeanforderungssignal RTS (request to send) gesteuert, das über die Sendeanforderungsleitung 26 übertragen wird. Wenn das Signal RTS Null ist, ist der Koppeltreiber 6" als Sender wirksam, d.h. der Koppeltreiber 6" sendet die Informationen, die er über die Bussegmente 1 empfängt, weiter an den (nicht dargestellten) Busteilnehmer 2.

Die Sendeanforderungsleitung 26 ist auch mit der Senderichtungsauswertungsschaltung 27 verbunden. Die Senderichtungsauswertungsschaltung 27 besteht dabei aus dem Inverter 28 und den beiden NAND-Gattern 29 und 30. Als zweites Eingangssignal wird der Signalauswertungsschaltung 27 das Ausgangssignal Q des Senderichtungsflipflops 31 zugeführt. Das Signal Q wird als Senderichtungssignal DIR aus dem Schnittstellenbaustein herausgeführt und steht daher anderweitig, z.B. für Diagnosezwecke, zur Verfügung.

Wenn das Signal RTS Null ist, der Koppeltreiber 6" also als Sender wirkt, sind die Ausgänge x, y, d.h. die Senderichtungssignale x, y, der NAND-Gatter 29, 30 gleich logisch Eins. Die aus den NOR-Gattern 32 und den NAND-Gattern 33 bestehenden Logikschaltungen wirken daher nur als Verzögerungsglieder, reichen aber ansonsten die an den internen Sendeausgängen 12 anliegenden Signale weiter. Da auch an den als NAND-Gatter ausgebildeten Logikgattern 20 die Signale x, y eingespeist werden, reagieren auch die Logikgatter 20 wie bereits in FIG 4 beschrieben auf die Ausgangssignale der Busauswertungsschaltungen. Das Durchreichen von z.B. von links nach rechts übertragenen Daten erfolgt also wie in FIG 4 beschrieben.

Da zudem der Koppeltreiber 6" auf "Senden" geschalten ist und der interne Empfangseingang 11" des Koppeltreibers 6" über das AND-Gatter 34 mit den Ausgängen der NAND-Gatter 33 verbunden ist, kann der Koppeltreiber 6" über den Ringbus 1 übertragene Daten empfangen und an den nicht dargestellten Busteilnehmer weitergeben.

Wenn der (in FIG 6 nicht dargestellte) Busteilnehmer, der an den Koppeltreiber 6" angeschlossen ist, eine Nachricht über den Ringbus 1 übertragen will, wird das Signal RTS auf logisch Eins gesetzt. Da den NAND-Gattern 29, 30 als zweites Eingangssignal zueinander komplementäre Signale zugeführt werden, wird eines der beiden Ausgangssignale x, y zu Null, das andere bleibt Eins. Im folgenden ist angenommen, daß das Signal x zu Null geworden ist. Dies hat folgende Auswirkungen:

Da das Signal x dem rechten der Logikgatter 20 zugeführt wird, ist das Ausgangssignal dieses Logikgatters 20 auf Eins festgelegt. Der zugehörige rechte Bustreiber 6 wird daher auf Senden geschalten, das Empfangen wird gesperrt. Gleichzeitig ist auch der Ausgang des linken der NAND-Gatter 33 auf Eins fixiert, da auch diesem NAND-Gatter 33 das Signal x zugeführt wird. Von links empfangene Nachrichten stören also nicht mehr das Senden über den Koppeltreiber 6". Das NAND-Gatter 33 wirkt jetzt also als Sperrgatter. Das Ringbussystem wird daher während des Sendens der Nachricht logisch aufgetrennt. Dies ist nötig, da ansonsten nach einem Durchlauf der Nachricht durch den gesamten Ring die eigene Nachricht wieder empfangen würde und der Ring sich daher selbst blockieren würde. Nach dem Senden der Nachricht wird das Signal RTS wieder zurückgesetzt. Die Bustreiber 6 können daher wieder empfangen, so wie bei FIG 4 beschrieben.

Das Signal RTS steuert selbstverständlich nicht nur die Ansteuerschaltungen 15 und die Buslogik, sondern auch den Koppeltreiber 6". Hierzu wird das Signal RTS über den Inverter 35 den Steuereingängen 9", 10" des Koppeltreibers 6" zugeführt. Weiterhin wird das durch das Logikgatter 35 invertierte Signal RTS als Taktsignal T dem Flipflop 31 zugeführt.

Das Flipflop 31 wirkt beim Senden des Koppeltreibers 6" auf die Bussegmente 1 als D-Flipflop. Das Flipflop 31 wird daher aufgrund des rückgekoppelten invertierten Ausgangs Q nach jedem Sendevorgang umgeschalten. In Verbindung mit dem Busprotokoll (z.B. beim PROFIBUS), das eine Telegrammwiederholung vorsieht, ist dadurch gewährleistet, daß das Senden von Nachrichten abwechselnd nach links und nach rechts erfolgt, wenn der angesprochene Busteilnehmer nicht antwortet. Die Belastung des Ringbussystems erhöht sich zwar bei einer Leitungsstörung, der Ringbus bleibt aber als Linienbus betreibbar.

Das Senderichtungsflipflop 31 weist außer seinem Umschalteingang CLK, dem das Taktsignal T zugeführt wird, noch einen Setzeingang S und einen Rücksetzeingang R auf. An diese Eingänge S, R sind die Ausgänge der NAND-Gatter 33 angeschlossen. Dadurch wird das Flipflop 31 beim Empfang einer Nachricht über eines der Bussegmente 1 stets derart geschalten, daß beim nächsten Sendevorgang des Koppeltreibers 6" die zu übertragende Nachricht in die Richtung gesendet wird, aus der die letzte Nachricht kam.

Wenn nun, z.B. aufgrund eines Drahtbruchs oder eines Kurzschlusses, die Verbindung zwischen dem in FIG 6 dargestellten Schnittstellenbaustein und einem benachbarten Schnittstellenbaustein gestört ist, soll dennoch ein Linienbetrieb des dann aufgetrennten Ringbusses aufrechterhalten werden können. Im folgenden ist angenommen, daß die Verbindung zwischen dem in FIG 6 dargestellten Schnittstellenbaustein und einem links davon angeordneten, der Übersichtlichkeit halber nicht dargestellten, Schnittstellenbaustein gestört ist.

Die beiden Leitungen des linken Bussegmentes 1 besitzen dann ein gleiches Spannungsniveau. Dadurch fällt über der Diode des Optokopplers 36 keine Spannung mehr ab. Der Optokoppler 36 sperrt folglich. Dadurch wird der zweite Eingang des linken NOR-Gatters 32 auf logisch Eins gelegt. Der Ausgang des NOR-Gatters 32 ist daher stets Null, unabhängig vom Wert des zweiten Eingangs, der mit dem internen Sendeausgang 12 des linken Bustreibers 6 verbunden ist. Dadurch liefert das linke Sperrgatter 33 als Ausgangssignal stets eine Eins. Der Schnittstellenbaustein nach FIG 6 kann daher zumindest von rechts Nachrichten empfangen und Nachrichten nach rechts senden. Das Ringbussystem bleibt trotz der Leitungsunterbrechung als Linienbus weiterhin betreibbar.

Weiterhin soll der Betrieb des Ringbussystems auch dann aufrechterhalten werden können, wenn die in FIG 6 nicht dargestellte Stromversorgung des Schnittstellenbausteins abgeschaltet wird. Hierzu sind die zwei Leitungen 37 vorgesehen, welche das linke Bussegment 1 und das rechte Bussegment 1 über das Relais 38 miteinander verbinden. Das Relais 38 ist ein Öffner. Im Normalbetrieb sind die Kontakte des Relais 38 also nicht geschlossen, die Überbrückung findet nicht statt. Wenn nun die Stromversorgung abgeschaltet wird, schließt das Relais 38 die Kontakte und überbrückt den Schnittstellenbaustein. Der Betrieb des Ringbussystems wird dadurch weiterhin gewährleistet.

Wie obenstehend erwähnt, ist es selbstverständlich auch möglich, den in FIG 6 beschriebenen Schnittstellenbaustein mit dem Schnittstellenbaustein von FIG 5 zu kombinieren. Selbst bei einer derartigen Kombination ist die benötigte Elektronikschaltung von einer bestechenden Einfachheit und äußerst kostengünstig zu realisieren. Es werden nämlich keinerlei Speicher, Mikroprozessoren oder ASICs benötigt, sondern lediglich einige wenige Standard-Bauelemente.

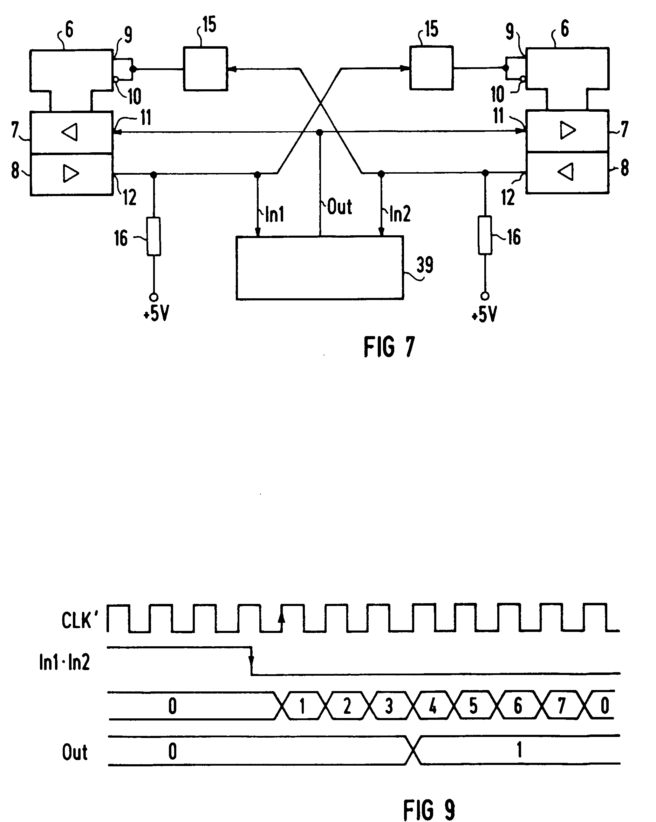

FIG 7 entspricht im Prinzip der FIG 4. Gemäß FIG 7 sind die Bustreiber 6 an der Übersichtlichkeit halber nicht dargestellte externe Zwei- oder Vierdrahtbusse angeschlossen. Die Ausgangssignale der internen Sendeausgänge 12 werden über Ansteuerschaltungen 15 an die Steuereingänge 9, 10 des jeweils anderen Bustreibers 6 angelegt. Weiterhin werden die Ausgangssignale der internen Sendeausgänge 12 als Eingangssignale Inl, In2 der Auswerteeinheit 39 zugeführt. Die Auswerteeinheit 39 wertet die Signale aus und gibt das Ausgangssignal Out aus, das den internen Empfangseingängen 11 der Bustreiber 6 zugeführt wird.

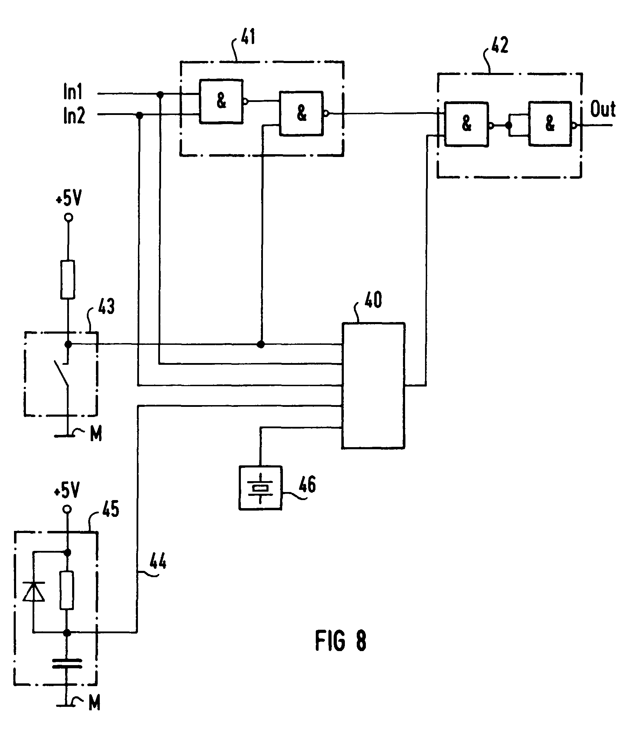

Gemäß FIG 8 werden die Eingangssignale Inl, In2 in der Auswerteeinheit 39 einerseits dem GAL 40 (GAL = generic array logic) und andererseits der Auswerteschaltung 41 zugeführt. Die Ausgangssignale des GAL 40 und der Auswerteschaltung 41 werden der Verzögerungsschaltung 42 zugeführt, deren Ausgangssignal Out das an die internen Empfangseingänge 11 zu liefernde Ausgangssignal Out darstellt.

Sowohl der Auswerteschaltung 41 als auch dem GAL 40 werden über den Schalter 43 wahlweise das Ruhepotential des Busses von + 5 Volt oder das Sendepotential M zugeführt. Wenn der Schalter 43 geöffnet ist, hängt das Ausgangssignal der Auswerteschaltung 41 von den Eingangssignalen Inl, In2 ab. Das GAL 40 dagegen ist derart programmiert, daß es bei dieser Stellung des Schalters 43 stets eine 1 als Ausgangssignal liefert.

Umgekehrt liefert bei geschlossenem Schalter 43 die Auswerteschaltung 41 stets eine 1, während das Ausgangssignal des GAL 40 in diesem Fall von den Eingangssignalen In1, In2 abhängt.

Aufgrund der Stellung des Schalters 43 ist also festgelegt, ob der Schnittstellenbaustein baudratenunabhängig oder mit vorgegebener Baudrate betrieben wird.

Damit der Betrieb des GAL 40 beim Einschalten der Spannungsversorgung des Schnittstellenbausteins ordnungsgemäß aufgenommen wird, ist an einen der Eingänge des GAL 40 über die Leitung 44 ein Tiefpaß 45 angeschlossen. Der Tiefpaß 45, der im wesentlichen aus einem RC-Glied besteht, bewirkt, daß das GAL 40 bei einer Spannungswiederkehr verzögert anläuft, also erst anläuft, wenn die volle Betriebsbereitschaft des Schnittstellenbausteins wieder hergestellt ist.

Außerdem ist an das GAL 40 der Taktgeber 46 angeschlossen, dessen Takt CLK' dem GAL 40 zugeführt ist. Der Takt CLK' ist im vorliegenden Fall 12 MHz.

Gemäß FIG 9 ist die Wirkungsweise des GAL 40 wie folgt: Das GAL 40 wird mit dem Takt CLK' getaktet. Bei einer Übertragungsrate von 1,5 MBaud entspricht 1 Bit folglich 8 Takten des Taktes CLK'. Die steigenden Flankenwechsel des Taktes CLK' werden daher gezählt und das beim vierten Flankenwechsel von Null auf Eins anstehende Signal In1 AND In2 übernommen und über den Ausgang als Ausgangssignal Out ausgegeben. Danach wird nach jeweils 8 Taktzyklen das dann jeweils anstehende Signal In1 AND In2 übernommen und ausgegeben. Im Regelfall werden immer 11 Bit übertragen, nämlich 1 Startbit, 8 Datenbits, 1 Paritätsbit und ein Stopbit. Das Startbit ist bei den meisten Busprotokollen immer Null, das Stopbit immer 1. Auch der Profibus verwendet dieses Busprotokoll. Diese Kenntnis des Busprotokolls wird zur Erkennung von Leitungsstörungen verwendet.

Wie obenstehend erwähnt, muß das erste Bit eines Telegramms stets Null sein. Wenn daher eine kurzfristige Leitungsstörung das GAL 40 anstößt, so wird beim ersten zu übertragenden Bit abgefragt, ob dieses Bit die ersten vier Flankenwechsel des Taktes CLK' immer Null ist. Wenn das Bit während dieser vier Flankenwechsel auf Eins zurückgeht, liegt eine Leitungsstörung vor und die Übertragung des Bits unterbleibt. Das GAL 40 geht wieder zurück in seinen Ruhezustand.

Wenn das erste Bit Null ist, werden dieses Bit und die 10 folgenden Bits übertragen. Als Ausgangssignal Out wird der Wert Inl AND In2 ausgegeben, der beim vierten Flankenwechsel am GAL 40 ansteht. Da gemäß dem Busprotokoll das letzte zu übertragende Bit eine 1 sein muß, wird der Empfang des letzten Bits nicht mehr abgewartet sondern sofort eine 1 gesendet, wenn das 11. Bit zu übertragen ist. Danach geht der GAL 40 wieder in seinen Ruhestand. Dadurch ist der Schnittstellbaustein schneller wieder empfangsbereit.

Die im GAL 40 zu realisierenden Verschaltungen bestehen nur aus Frequenzteilern und einfachen Logikfunktionen. Die Realisierung dieser Verschaltungen in einem GAL ist dem Fachmann für programmierbare Logikfelder bekannt.

Auch die Schaltung gemäß FIG 7 und 8 ist selbstverständlich auch in den Schaltungen gemäß FIG 5 und 6 sowie in deren Kombination verwendbar.

## Patentansprüche

1. Schnittstellenbaustein (4) zum Verbinden zweier Bussegmente (1),
- mit mindestens zwei Bustreibern (6), die jeweils zumindest
-- einen Sender (7) mit einem internen Empfangseingang (11) und einem externen Sendeausgang,
-- einen Empfänger (8) mit einem externen Empfangseingang und einem internen Sendeausgang (12) und
-- mindestens einen Steuereingang (9, 10) zum Schalten des Bustreibers (6) auf externes Senden bzw. Empfangen aufweisen,
- wobei der Schnittstellenbaustein (4) zwei voneinander getrennte Ansteuerschaltungen (15) aufweist, wobei die internen Sendeausgänge (12) der Empfänger (8) der Bustreiber (6) über je eine der Ansteuerschaltungen (15) mit dem Steuereingang (9,10) des jeweils anderen Bustreibers (6) verbunden sind,
**dadurch gekennzeichnet,**
- daß die Ansteuerschaltungen (15) Busauswertungsschaltungen aufweisen, welche jeweils
-- einen Leitungswiderstand (17), der zwischen dem internen Sendeausgang (12) des einen Bustreibers (6) und dem Steuereingang (9,10) des anderen Bustreibers (6) angeordnet ist,
-- einen Kondensator (19), der den Leitungswiderstand (17) steuereingangsseitig mit dem Sendepotential (M) des Sendeausgangs (12), z.B. Masse (M), verbindet, und
-- eine Diode (18), die parallel zum Leitungswiderstand (17) angeordnet und bezüglich Ruhe- und Sendepotential (M) in Sperrichtung geschaltet ist,
aufweisen,
- so daß das Ausgangssignal der Busauswertungsschaltung steuereingangsseitig am Leitungswiderstand (17) abgreifbar ist.

2. Schnittstellenbaustein nach Anspruch 1,
**dadurch gekennzeichnet,** daß
er zwei Verzögerungsschaltungen (13) aufweist, wobei die internen Sendeausgänge (12) über je eine der Verzögerungsschaltungen (13) mit dem internen Empfangseingang (11) des Senders (7) des jeweils anderen Bustreibers (6) verbunden sind.

3. Schnittstellenbaustein nach Anspruch 2,
**dadurch gekennzeichnet,** daß
die Verzögerungsschaltungen (13) auch als Signalauffrischungsschaltungen ausgebildet sind.

4. Schnittstellenbaustein nach Anspruch 3,
**dadurch gekennzeichnet**, daß
die Verzögerungsschaltungen (13) mindestens ein Logikgatter (14) aufweisen.

5. Schnittstellenbaustein nach Anspruch 4,
**dadurch gekennzeichnet,** daß
die Verzögerungsschaltungen (13) mindestens ein Logikgatter (14) mehr aufweisen als die Ansteuerschaltungen (15),

6. Schnittstellenbaustein nach einem der obigen Ansprüche,
**dadurch gekennzeichnet,** daß
die Ansteuerschaltungen (15) einen Pullwiderstand (16) aufweisen, der die internen Sendeausgänge (12) mit dem Ruhepotential des Sendeausgangs (12), z.B. +5 Volt, verbindet.

7. Schnittstellenbaustein nach einem der obigen Ansprüche,
**dadurch gekennzeichnet,** daß
die Zeitkonstante des von Leitungswiderstand (17) und Kondensator (19) gebildeten RC-Gliedes (17, 19) derart bemessen ist, daß ein Übergang vom Sendepotential (M) auf das Ruhepotential des einen Bustreibers (6) erst nach dem aktiven Senden dieses Übergangs durch den anderen Bustreiber (6) den anderen Bustreiber (6) vom Senden auf Empfangen umschaltet.

8. Schnittstellenbaustein nach einem der obiger. Ansprüche,
**dadurch gekennzeichnet**, daß
zwischen den Busauswertungsschaltungen und den Steuereingängen (9, 10) der Bustreiber (6) je ein Logikgatter (20), z.B. ein Inverter (20) oder ein NAND-Gatter (20), angeordnet Ist.

9. Schnittstellenbaustein nach Anspruch 8,
**dadurch gekennzeichnet,**
- daß er einen Zusatztreiber (6') aufweist, dessen interner Sendeausgang (12') mit dem internen Sendeausgang (12) eines der Bustreiber (6) und/oder dessen interner Empfangseingand (11') mit dem internen Empfangseingang (11) des einen Bustreibers (6) verhunden ist,
- daß das Logikgalter (20) der Ansteuerschaltung (15), die mit dem Steuereingang (9, 10) dieses Bustreibers (6) verbunden ist, mindestens zwei Eingänge aufweist, wobei ein Eingang mit der zugehörigen Busauswertungsschaltung verbunden ist,
- daß der zweite Eingang des Logikgatters (20) über einen Schalter (24) mit mindestens zwei Schaltstellungen wahlweise mit dem Ruhe- und dem Sendepotential (M) verbindbar ist,
- daß ein Aktivierungssteuereingang (10') des Zusatztreibers (6') über denselben Schalter (24) ebenfalls wahlweise mit dem Ruhe- und dem Sendepotential (M) verbindbar ist,
- daß in der einen Schaltstellung das Ausgangssignal des Logikgatters (20) vom Ausgangssignal der zugehörigen Busauswerteschaltung abhängt, so daß der Bustreiber (6), dessen Steuereingang (9, 10 ) mit dem Ausgangssignal des Logikgatters (20) beaufschlagt ist, in Abhängigkeit vom Ausgangssignal der Busauswertungsschaltung als Sender bzw. als Empfänger betreibbar ist, und der Zusatztreiber (6') deaktiviert ist und
- daß in der anderen Schaltstellung das Ausgangssignal des Logikgatters (20) durch die Schaltstellung festgelegt ist, so daß der Bustreiber (6), dessen Steuereingang (9, 10) mit dem Ausgangssignal des Logikgatters (20) beaufschlagt ist, nur als Sender bzw. nur als Empfanger betreibbar ist, und der Zusatztreiber (6') in der zur Betriebsart des Bustreibers (6) komplementären Betriebsart betreibbar ist.

10. Schnittstallenbaustein nach Anspruch 9,
**dadurch gekennzeichnet**, daß
der zweite Eingang des Logikgatters (20) über einen Pullwiderstand (25) mit dem Sendepotential (M) verbunden ist und über den Schalter (24) mit dem Ruhepotential verbindbar ist.

11. Schnittstellenbaustein nach Anspruch 9 der 10
**dadurch gekennzeichnet,** daß
vor dem Aktivierungssteuereingang (10') des Zusatztreibers (6') ein Logikgatter (22) angeordnet ist.

12. Schnittstellenbaustein nach Anspruch 11,
**dadurch gekennzeichnet**, daß
das Logikgatter (22) über einen Pullwiderstand (23) mit dem Sendepotential (M) verbunden ist und über den Schalter (24) mit dem Ruhepotential verbindbar ist.

13. Schnittstellenbaustein nach einem der obigen Ansprüche,
**dadurch gekennzeichnet,** daß
der Schnittstellenbaustein (4) einen Logikbaustein (40) und einen Taktgeber (46) aufweist, wobei der Logikbaustein (40) eingangsseitig mit dem Taktgeber (46) und den internen Sendeausgängen (12) der Empfänger (8) und ausgangsseitig mit den internen Empfangseingängen (11) der Sender (7) verbunden ist.

14. Schnittstellenbaustein nach Anspruch 13,
**dadurch gekennzeichnet,** daß
der Logikbaustein (40) ein programmierbares Logikfeld (40), z.B. ein GAL, ist.

15. Schnittstellenbaustein nach Anspruch 13 oder 14,
**dadurch gekennzeichnet,** daß
der Logikbaustein (40) einen Reseteingang aufweist und daß der Reseteingang über ein RC-Glied (45) an die Versorgungsspannung angeschlossen ist.

16. Schnittstellenbaustein nach Anspruch 13, 14 oder 15,
**dadurch gekennzeichnet,** daß
zwischen dem Logikbaustein (40) und den internen Empfangseingängen (11) eine Verzögerungsschaltung (42) angeordnet ist.

17. Schnittstellenbaustein nach Anspruch 16,
**dadurch gekennzeichnet,**
- daß er eine Auswerteschaltung (41) aufweist, die eingangsseitig mit den internen Sendeausgängen (12) und ausgangsseitig mit der Verzögerungsschaltung (42) verbunden ist,
- daß die Auswerteschaltung (41) über einen Schalter (43) mit mindestens zwei Schaltstellungen wahlweise mit dem Ruheund dem Sendepotential (M) verbindbar ist,
- daß der Logikbaustein (40) über denselben Schalter (43) ebenfalls wahlweise mit dem Ruhe- und dem Sendepotential (M) verbindbar ist,
- daß in der einen Schaltstellung das Ausgangssignal des Logikbausteins (40) von den Ausgangssignalen der internen Sendeausgänge (12) abhängt und die Auswerteschaltung (41) ein unveränderliches Ausgangssignal liefert, wobei das Ausgangssignal der Auswerteschaltung (41) derart festgelegt ist, daß das Ausgangssignal der Verzögerungsschaltung (42) vom Ausgangssignal des Logikbausteins (40) abhängt, und
- daß in der anderen Schaltstellung das Ausgangssignal der Auswerteschaltung (41) von den Ausgangssignalen der internen Sendeausgänge (12) abhängt und der Logikbaustein (40) ein unveränderliches Ausgangssignal liefert, wobei das Ausgangssignal des Logikbausteins (40) derart festgelegt ist, daß das Ausgangssignal der Verzögerungsschaltung (42) vom Ausgangssignal der Auswerteschaltung (41) abhängt.

18. Schnittstellenbaustein nach einem der obigen Ansprüche,
**dadurch gekennzeichnet,** daß
er einen Koppeltreiber (6") zum Einspeisen und Empfangen von Bussignalen aufweist, dessen interner Sendeausgang (12") eingangsseitig mit den Verzögerungsschaltungen (13) verbunden ist, dessen interner Empfangseingang (11") mit den internen Sendeausgängen (12) der Bustreiber (6) verbunden ist, z.B. über ein Logikgatter (34), und dessen Steuereingang (9", 10") mit einer Sendeanforderungsleitung (26) verbunden ist.

19. Schnittstellenbaustein nach Anspruch 18,
**dadurch gekennzeichnet,**
- daß der Schnittstellenbaustein (4) ein Senderichtungsflipflop (31) mit einem Umschalteingang (CLK) aufweist, der mit der Sendeanforderungsleitung (26) verbunden ist,
- daß der Schnittstellenbaustein (4) eine Senderichtungsauswertungsschaltung (27) aufweist, die eingangsseitig mit der Sendeanforderungsleitung (26) und dem Senderichtungsflipflop (31) verbunden ist und die mindestens ein Senderichtungssignal (x, y) liefert, und
- daß zwischen den internen Sendeausgängen (12) der Bustreiber (6) einerseits und den Verzögerungsschaltungen (13) und den Ansteuerschaltungen (15) andererseits Sperrgatter (33) angeordnet sind, denen das Senderichtungssignal (x, y) der Senderichtungsauswertungsschaltung (27) zugeführt ist.

20. Schnittstellenbaustein nach Anspruch 19,
**dadurch gekennzeichnet,** daß
die Sperrgatter (33) zwischen den internen Sendeausgängen (12) der Bustreiber (6) und dem internen Empfangseingang (11") des Koppeltreibers (6") angeordnet sind.

21. Schnittstellenbaustein nach Anspruch 19 oder 20,
**dadurch gekennzeichnet,** daß
das Senderichtungsflipflop (31) einen Setz- (S) und einen Rücksetzeingang (R) aufweist und daß diese Eingänge (R, S) mit den Ausgängen der Sperrgatter (33) verbunden sind.

22. Schnittstellenbaustein nach einem der Ansprüche 8 bis 12 und einem der Ansprüche 19 bis 21,
**dadurch gekennzeichnet,** daß
die Logikgatter (20) der Ansteuerschaltungen (15) mindestens zwei Eingänge aufweisen, wobei der eine Eingang mit der zugehörigen Busauswertungsschaltung und der andere Eingang mit der Senderichtungsauswertungsschaltung (25) verbunden ist.

23. Verwendung eines Schnittstellenbausteins (4) nach einem der Ansprüche 19 bis 22 in einem Ringbussystem.

## Claims

1. Interface module (4) for connecting two bus segments (1),
- having at least two bus drivers (6) which each have at least
-- one transmitter (7) with an internal receiving input (11) and an external transmitting output,
-- a receiver (8) with an external receiving input and an internal transmitting output (12) and
-- at least one control input (9, 10) for switching the bus driver (6) to external transmitting and receiving,
- wherein the interface module (4) has two control circuits (15) which are separate from each other,
- wherein the internal transmitting outputs (12) of the receivers (8) of the bus drivers (6) are connected to the control input (9, 10) of the respective other bus driver (6) by way of one of the control circuits (15)
characterized in that
- the control circuits (15) have bus evaluation circuits, each of which has
-- a line resistor (17) which is arranged between the internal transmitting output (12) of the one bus driver (6) and the control input (9, 10) of the other bus driver (6),
-- a capacitor (19) which connects the line resistor (17) on the control-input side to the transmitting potential (M) of the transmitting output (12), for example earth (M), and
-- a diode (18) which is arranged in parallel with the line resistor (17) and is connected in the reverse direction with respect to rest potential and transmitting potential (M),
- so that the output signal of the bus evaluation circuit can be picked up on the control-input side at the line resistor (17).

2. Interface module according to claim 1,
characterized in that it has two time-delay circuits (13), wherein the internal transmitting outputs (12) are connected by way of one of the time-delay circuits (13) to the internal receiving input (11) of the transmitter (7) of the respective other bus driver (6).

3. Interface module according to claim 2,
characterized in that the time-delay circuits (13) are also formed as signal refreshment circuits.

4. Interface module according to claim 3,
characterized in that the time-delay circuits (13) have at least one logic gate (14).

5. Interface module according to claim 4,
characterized in that the time-delay circuits (13) have at least one more logic gate (14) than the control circuits (15).

6. Interface module according to one of the preceding claims, characterized in that the control circuits (15) have a pull resistor (16) which connects the internal transmitting outputs (12) to the rest potential of the transmitting output (12), for example +5 volt.

7. Interface module according to one of the preceding claims, characterized in that the time constant of the RC element (17, 19) formed by the line resistor (17) and the capacitor (19) is dimensioned such that a transition from the transmitting potential (M) to the rest potential of the one bus driver (6) only transfers the other bus driver (6) from transmitting to receiving after the active transmission of this transition by the other bus driver (6).

8. Interface module according to one of the preceding claims, characterized in that a respective logic gate (20), for example an inverter (20) or a NAND gate (20), is arranged between the bus evaluation circuits and the control inputs (9, 10) of the bus drivers (6).

9. Interface module according to claim 8,
characterized in that
- it has an additional driver (6'), the internal transmitting output (12') of which is connected to the internal transmitting output (12) of one of the bus drivers (6), and/or the internal receiving input (11') of which is connected to the internal receiving input (11) of the one bus driver (6),
- the logic gate (20) of the control circuit (15) which is connected to the control input (9, 10) of this bus driver (6) has at least two inputs, wherein one input is connected to the associated bus evaluation circuit,
- the second input of the logic gate (20) can be connected optionally to the rest potential and the transmitting potential (M) by way of a switch (24) with at least two positions,
- an activation control input (10') of the additional driver (6') can likewise be connected optionally to the rest potential and the transmitting potential (M) by way of the same switch (24),
- in the one position the output signal of the logic gate (20) depends on the output signal of the associated bus evaluation circuit, so that the bus driver (6), the control input (9, 10) of which receives the output signal of the logic gate (20), can be operated as transmitter and as receiver in dependence upon the output signal of the bus evaluation circuit, and the additional driver (6') is deactivated, and
- in the other position the output signal of the logic gate (20) is set by the position, so that the bus driver (6), the control input (9, 10) of which receives the output signal of the logic gate (20), can only be operated as transmitter or only as receiver, and the additional driver (6') can be operated in the operating mode which is complementary to the operating mode of the bus driver (6).

10. Interface module according to claim 9,
characterized in that the second input of the logic gate (20) is connected to the transmitting potential (M) by way of a pull resistor (25) and can be connected to the rest potential by way of the switch (24).

11. Interface module according to claim 9 or 10,
characterized in that a logic gate (22) is arranged before the activation control input (10') of the additional driver (6').

12. Interface module according to claim 11,
characterized in that the logic gate (22) is connected to the transmitting potential (M) by way of a pull resistor (23) and can be connected to the rest potential by way of the switch (24).

13. Interface module according to one of the preceding claims, characterized in that the interface module (4) has a logic module (40) and a clock generator (46), wherein the logic module (40) is connected on the input side to the clock generator (46) and the internal transmitting outputs (12) of the receivers (8) and on the output side to the internal receiving inputs (11) of the transmitters (7).

14. Interface module according to claim 13,
characterized in that the logic module (40) is a programmable logic field (40), for example a GAL.

15. Interface module according to claim 13 or 14,
characterized in that the logic module (40) has a resetting input and in that the resetting input is connected to the supply voltage by way of an RC element (45).

16. Interface module according to claim 13, 14 or 15, characterized in that a time-delay circuit (42) is arranged between the logic module (40) and the internal receiving inputs (11).

17. Interface module according to claim 16,
characterized in that
- it has an evaluation circuit (41) which is connected on the input side to the internal transmitting outputs (12) and on the output side to the time-delay circuit (42),
- the evaluation circuit (41) can be connected optionally to the rest potential and the transmitting potential (M) by way of a switch (43) with at least two positions,
- the logic module (40) can likewise be connected optionally to the rest potential and the transmitting potential (M) by way of the same switch (43),
- in the one position the output signal of the logic module (40) depends on the output signals of the internal transmitting outputs (12), and the evaluation circuit (41) supplies an invariable output signal, wherein the output signal of the evaluation circuit (41) is set in such a way that the output signal of the time-delay circuit (42) depends on the output signal of the logic module (40), and
- in the other position the output signal of the evaluation circuit (41) depends on the output signals of the internal transmitting outputs (12), and the logic module (40) supplies an invariable output signal, wherein the output signal of the logic module (40) is set in such a way.that the output signal of the time-delay circuit (42) depends on the output signal of the evaluation circuit (41).

18. Interface module according to one of the preceding claims, characterized in that it has a communications driver (6") for supplying and receiving bus signals, the internal transmitting output (12") of which is connected on the input side to the time-delay circuits (13), the internal receiving input (11") of which is connected to the internal transmitting outputs (12) of the bus drivers (6), for example by way of a logic gate (34), and the control input (9", 10") of which is connected to a transmission request line (26).

19. Interface module according to claim 18,
characterized in that
- the interface module (4) has a transmission direction flipflop (31) with a transfer input (CLK) which is connected to the transmission request line (26),
- the interface module (4) has a transmission direction evaluation circuit (27) which is connected on the input side to the transmission request line (26) and the transmission direction flipflop (31), and which supplies at least one transmission direction signal (x, y), and
- blocking gates (33) are arranged between the internal transmitting outputs (12) of the bus drivers (6) on the one hand and the time-delay circuits (13) and the control circuits (15) on the other hand, to which blocking gates the transmission direction signal (x, y) of the transmission direction evaluation circuit (27) is supplied.

20. Interface module according to claim 19,
characterized in that the blocking gates (33) are arranged between the internal transmitting outputs (12) of the bus drivers (6) and the internal receiving input (11") of the communications driver (6").

21. Interface module according to claim 19 or 20,
characterized in that the transmission direction flipflop (31) has a setting input (S) and a resetting input (R) and in that these inputs (R, S) are connected to the outputs of the blocking gates (33).

22. Interface module according to one of claims 8 to 12 and one of claims 19 to 21, characterized in that the logic gates (20) of the control circuits (15) have at least two inputs, wherein the one input is connected to the associated bus evaluation circuit and the other input is connected to the transmission direction evaluation circuit (27).

23. Use of an interface module (4) according to one of claims 19 to 22 in a ring bus system.

## Revendications

1. Module d'interface (4) pour connecter deux segments de bus (1),
- comprenant au moins deux circuits de commande de bus (6) qui comportent chacun au moins
-- un émetteur (7) ayant une entrée réceptrice interne (11) et une sortie émettrice externe,
-- un récepteur (8) ayant une entrée réceptrice externe et une sortie émettrice interne (12) et
-- au moins une entrée de commande (9, 10) pour commuter le circuit de commande de bus (6) sur l'émission externe ou sur la réception externe,
- dans lequel le module d'interface (4) comporte deux circuits de contrôle (15) séparés l'un de l'autre, dans lequel les sorties émettrices internes (12) des récepteurs (8) des circuits de commande de bus (6) sont reliées à chaque fois par l'intermédiaire de l'un des circuits de contrôle (15) à l'entrée de commande (9, 10) de l'autre circuit de commande de bus (6) respectif,
caractérisé par le fait que
- les circuits de contrôle (15) comportent des circuits d'évaluation de bus qui comportent chacun
-- une résistance de ligne (17) qui est montée entre la sortie émettrice interne (12) d'un circuit de commande de bus (6) et l'entrée de commande (9, 10) de l'autre circuit de commande de bus (6),
-- un condensateur (19) qui relie la résistance de ligne (17) du côté de l'entrée de commande au potentiel d'émission (M) de la sortie émettrice (12), par exemple à la masse (M), et
-- une diode (18) qui est montée en parallèle avec la résistance de ligne (17) et qui est branchée dans le sens de non-conduction par rapport au potentiel de repos et au potentiel d'émission (M),
- de telle sorte que le signal de sortie du circuit d'évaluation de bus peut être prélevé du côté de l'entrée de commande sur la résistance de ligne (17).

2. Module d'interface selon la revendication 1,
caractérisé par le fait qu'il comporte deux circuits de retardement (13), les sorties émettrices internes (12) étant reliées à chaque fois par l'intermédiaire de l'un des circuits de retardement (13) à l'entrée réceptrice interne (11) de l'émetteur (7) de l'autre circuit de commande de bus (6) respectif.

3. Module d'interface selon la revendication 2,
caractérisé par le fait que les circuits de retardement (13) sont aussi conçus comme des circuits de rafraîchissement de signal.

4. Module d'interface selon la revendication 3,
caractérisé par le fait que les circuits de retardement (13) comportent au moins une porte logique (14).

5. Module d'interface selon la revendication 4,
caractérisé par le fait que les circuits de retardement (13) comportent au moins une porte logique (14) de plus que les circuits de contrôle (15).

6. Module d'interface selon l'une des revendications précédentes,
caractérisé par le fait que les circuits de contrôle (15) comportent une résistance reliée aux tensions hautes (16) qui relie les sorties émettrices internes (12) au potentiel de repos de la sortie émettrice (12), par exemple à + 5 V.

7. Module d'interface selon l'une des revendications précédentes,
caractérisé par le fait que la constante de temps du circuit RC (17, 19) formé par la résistance de ligne (17) et par le condensateur (19) est telle qu'une transition du potentiel d'émission (M) au potentiel de repos d'un circuit de commande de bus (6) commute l'autre circuit de commande de bus (6) de l'émission à la réception seulement après l'émission active de cette transition par l'autre circuit de commande de bus (6).

8. Module d'interface selon l'une des revendications précédentes,
caractérisé par le fait qu'il est monté entre les circuits d'évaluation de bus et les entrées de commande (9, 10) des circuits de commande de bus (6) à chaque fois une porte logique (20), par exemple un inverseur (20) ou une porte NAND (20).

9. Module d'interface selon la revendication 8,
caractérisé par le fait
- qu'il comporte un circuit de commande supplémentaire (6') dont la sortie émettrice interne (12') est reliée à la sortie émettrice interne (12) de l'un des circuits de commande de bus (6) et/ou dont l'entrée réceptrice interne (11') est reliée à l'entrée réceptrice interne (11) de l'un des circuits de commande de bus (6),
- que la porte logique (20) du circuit de contrôle (15) qui est relié à l'entrée de commande (9, 10) de ce circuit de commande de bus (6) comporte au moins deux entrées, une entrée étant reliée au circuit d'évaluation de bus associé,
- que la deuxième entrée de la porte logique (20) peut être reliée par l'intermédiaire d'un commutateur (24) ayant au moins deux positions de commutation au choix au potentiel de repos ou au potentiel d'émission (M),
- qu'une entrée de commande d'activation (10') du circuit de commande supplémentaire (6') peut être reliée par l'intermédiaire du même commutateur (24) également au choix au potentiel de repos ou au potentiel d'émission (M),
- que, dans une première position de commutation, le signal de sortie de la porte logique (20) dépend du signal de sortie du circuit d'évaluation de bus associé de telle sorte que le circuit de commande de bus (6) dont l'entrée de commande (9, 10) reçoit le signal de sortie de la porte logique (20) peut être commandé en tant qu'émetteur ou que récepteur en fonction du signal de sortie du circuit d'évaluation de bus, et que le circuit de commande supplémentaire (6') est désactivé et
- que, dans l'autre position de commutation, le signal de sortie de la porte logique (20) est fixé par la position de commutation de telle sorte que le circuit de commande de bus (6) dont l'entrée de commande (9, 10) reçoit le signal de sortie de la porte logique (20) peut être commandé seulement en tant qu'émetteur ou seulement en tant que récepteur et que le circuit de commande supplémentaire (6') peut être commandé dans le mode d'exploitation complémentaire du mode d'exploitation du circuit de commande de bus (6).

10. Module d'interface selon la revendication 9,
caractérisé par le fait que la deuxième entrée de la porte logique (20) est reliée par l'intermédiaire d'une résistance reliée aux tensions hautes (25) au potentiel d'émission (M) et peut être reliée par l'intermédiaire du commutateur (24) au potentiel de repos.

11. Module d'interface selon la revendication 9 ou 10,
caractérisé par le fait qu'une porte logique (22) est montée du côté amont de l'entrée de commande d'activation (10') du circuit de commande supplémentaire (6').

12. Module d'interface selon la revendication 11,
caractérisé par le fait que la porte logique (22) est reliée par l'intermédiaire d'une résistance reliée aux tensions hautes (23) au potentiel d'émission (M) et par l'intermédiaire du commutateur (24) au potentiel de repos.

13. Module d'interface selon l'une des revendications précédentes,
caractérisé par le fait que le module d'interface (4) comporte un module logique (40) et un générateur d'horloge (46), le module logique (40) étant relié en entrée au générateur d'horloge (46) et aux sorties émettrices internes (12) des récepteurs (8) et en sortie aux entrées réceptrices internes (11) des émetteurs (7).

14. Module d'interface selon la revendication 13,
caractérisé par le fait que le module logique (40) est un réseau logique programmable (40), par exemple un GAL.

15. Module d'interface selon la revendication 13 ou 14,
caractérisé par le fait que le module logique (40) comporte une entrée de remise à l'état initial et que l'entrée de remise à l'état initial est raccordée par l'intermédiaire d'un circuit RC (45) à la tension d'alimentation.

16. Module d'interface selon la revendication 13, 14 ou 15,
caractérisé par le fait qu'un circuit de retardement (42) est monté entre le module logique (40) et les entrées réceptrices internes (11).

17. Module d'interface selon la revendication 16, caractérisé par le fait
- qu'il comporte un circuit d'évaluation (41) qui est relié en entrée aux sorties émettrices internes (12) et en sortie au circuit de retardement (42),
- que le circuit d'évaluation (41) peut être relié par l'intermédiaire d'un commutateur (43) ayant au moins deux positions de commutation au choix au potentiel de repos ou au potentiel d'émission (M),
- que le module logique (40) peut être relié par l'intermédiaire du même commutateur (43) également au choix au potentiel de repos ou au potentiel d'émission (M),
- que, dans une position de commutation, le signal de sortie du module logique (40) dépend des signaux de sortie des sorties émettrices internes (12) et le circuit d'évaluation (41) délivre un signal de sortie invariable, le signal de sortie du circuit d'évaluation (41) étant fixé de telle sorte que le signal de sortie du circuit de retardement (42) dépend du signal de sortie du module logique (40), et
- que, dans l'autre position de commutation, le signal de sortie du circuit d'évaluation (41) dépend des signaux de sortie des sorties émettrices internes (12) et le module logique (40) délivre un signal de sortie invariable, le signal de sortie du module logique (40) étant fixé de telle sorte que le signal de sortie du circuit de retardement (42) dépend du signal de sortie du circuit d'évaluation (41).

18. Module d'interface selon l'une des revendications précédentes,
caractérisé par le fait qu'il comporte un circuit de commande de couplage (6") qui est destiné à l'émission et à la réception de signaux de bus, dont la sortie émettrice interne (12") est reliée côté entrée aux circuits de retardement (13), dont l'entrée réceptrice interne (11") est reliée aux sorties émettrices internes (12) des circuits de commande de bus (6), par exemple par l'intermédiaire d'une porte logique (34) , et dont l'entrée de commande (9", 10") est reliée à une ligne de demande d'émission (26).

19. Module d'interface selon la revendication 18,
caractérisé par le fait
- que le module d'interface (4) comporte une bascule bistable de direction d'émission (31) avec une entrée de commutation (CLK) qui est reliée à la ligne de demande d'émission (26),
- que le module d'interface (4) comporte un circuit d'évaluation de direction d'émission (27) qui est relié en entrée à la ligne de demande d'émission (26) et à la bascule bistable de direction d'émission (31) et qui délivre au moins un signal de direction d'émission (x, y), et
- qu'il est monté entre les sorties émettrices internes (12) des circuits de commande de bus (6) d'une part et les circuits de retardement (13) et les circuits de contrôle (15) d'autre part des portes de verrouillage (33) auxquelles est envoyé le signal de direction d'émission (x, y) du circuit d'évaluation de direction d'émission (27).

20. Module d'interface selon la revendication 19,
caractérisé par le fait que les portes de verrouillage (33) sont montées entre les sorties émettrices internes (12) des circuits de commande de bus (6) et l'entrée réceptrice interne (11") du circuit de commande de couplage (6").

21. Module d'interface selon la revendication 19 ou 20,
caractérisé par le fait que la bascule bistable de direction d'émission (31) comporte une entrée d'affectation (S) et une entrée de remise à l'état initial (R) et que ces entrées (R, S) sont reliées aux sorties des portes de verrouillage (33).

22. Module d'interface selon l'une des revendications 8 à 12 et l'une des revendications 19 à 21,
caractérisé par le fait que les portes logiques (20) des circuits de contrôle (15) comportent au moins deux entrées, une entrée étant reliée au circuit d'évaluation de bus associé et l'autre entrée étant reliée au circuit d'évaluation de direction d'émission (27).

23. Utilisation d'un module d'interface (4) selon l'une des revendications 19 à 22 dans un système de bus en anneau.
